# EUROPÄISCHE PATENTANMELDUNG

(11) **EP 4 644 062 A1**
(43) Veröffentlichungstag der Anmeldung: **05.11.2025**
(21) Anmeldenummer: 24173426.8
(22) Anmeldetag: 30.04.2024
(51) Int. Cl.: B25J 15/00, B25J 15/06, B65G 47/91, B65G 59/02, B65H 3/08, B25J 9/14

(54) **GREIFVORRICHTUNG MIT DRÜCKEINHEIT**

(71) Anmelder: J. Schmalz GmbH, 72293 Glatten (DE)
(72) Erfinder: Stockburger, Ralf, 72293 Glatten (DE); Fiedler, Maik, 73614 Schorndorf (DE)
(74) Vertreter: DREISS Patentanwälte PartG mbB

(57) **Zusammenfassung**

Die Erfindung betrifft eine Greifvorrichtung (10), umfassend einen Greifergrundkörper (12), und wenigstens zwei an dem Greifergrundkörper angeordnete Hubeinheiten (14), jeweils umfassend einen Hubkolben (16), welcher entlang einer Hubachse (18) zwischen einer axial eingefahrenen Konfiguration und einer axial ausgefahrenen Konfiguration verstellbar ist, wobei wenigstens eine Hubeinheit als Greifeinheit (26) ausgebildet ist, umfassend einen mit dem Hubkolben bewegungsgekoppelten Greifer (28) zum Greifen des Gegenstands, und wobei wenigstens eine Hubeinheit (14) als Drückeinheit ausgebildet ist, umfassend ein mit dem Hubkolben bewegungsgekoppeltes Drückelement (32) zum Ausüben einer Druckkraft auf einen von dem Greifer gehaltenen Gegenstand. Die Erfindung betrifft auch ein Verfahren zum Handhaben eines Gegenstands mit einer solchen Greifvorrichtung.

## Beschreibung

Die Erfindung betrifft eine Greifvorrichtung zum Greifen und Handhaben eines Gegenstands sowie ein Verfahren zum Handhaben eines Gegenstands mit einer solchen Greifvorrichtung.

Greifvorrichtungen sind in vielfältiger Art und Weise aus dem Stand der Technik bekannt. Eine Auswahl solcher Greifvorrichtungen umfasst beispielsweise mechanische Greifer, Magnetgreifer und Sauggreifer.

Sauggreifer weisen in der Regel wenigstens eine Saugstelle zum Ansaugen und somit Greifen eines Gegenstands auf. Beispielsweise sind Sauggreifer bekannt, welche eine Mehrzahl von Saugereinheiten aufweisen, die entlang einer Hubachse zwischen einer axial eingefahrenen Passivkonfiguration und einer axial ausgefahrenen Aktivkonfiguration verlagerbar an einem Greifergrundkörper gehaltert sind. Bei solchen Sauggreifern ist es möglich, durch selektives Ausfahren einzelner Saugereinheiten den Sauggreifer an unterschiedliche Geometrien zu greifender Gegenstände flexibel anzupassen.

Ein wichtiges Anwendungsgebiet von solchen Sauggreifern, aber auch von Greifvorrichtungen im Allgemeinen, ist das Abstapeln von Flachmaterialien, beispielsweise das Abstapeln von Blechen von einem Blechstapel. Hierbei kann das Problem auftreten, dass aufeinander gestapelte Bleche aufgrund von Adhäsionskräften aneinanderkleben, sodass beim Anheben eines obersten Bleches von einem Stapel ein darunterliegendes Blech mit angehoben wird.

Die Erfindung beschäftigt sich mit der Aufgabe, aufeinander gestapelte Gegenstände unterschiedlicher Geometrie auf konstruktiv einfache und kostengünstige Weise zu vereinzeln und sodann zuverlässig handhaben zu können.

Diese Aufgabe wird erfindungsgemäß durch eine Greifvorrichtung mit den Merkmalen des Anspruchs 1 gelöst. Die Greifvorrichtung ist zum Greifen und Handhaben eines Gegenstands, insbesondere Flachmaterials, weiter insbesondere Blechs, ausgebildet. Insbesondere ist die Greifvorrichtung zum Vereinzeln von aufeinander gestapelten Flachmaterialien, wie bspw. Blechen oder dgl., ausgebildet.

Die Greifvorrichtung umfasst einen Greifergrundkörper und wenigstens zwei an dem Greifergrundkörper angeordnete Hubeinheiten. Die Hubeinheiten weisen jeweils einen Hubkolben auf, welcher entlang einer Hubachse zwischen einer axial eingefahrenen Konfiguration und einer axial ausgefahrenen Konfiguration verstellbar an dem Greifergrundkörper gehaltert, insbesondere gelagert, ist. Insbesondere ist der Hubkolben in einer Ausfahrrichtung und in einer zu der Ausfahrrichtung entgegengesetzten Einfahrrichtung relativ zu dem Greifergrundkörper verstellbar. Die eingefahrene Konfiguration und die ausgefahrene Konfiguration bilden insbesondere Endstellungen eines Verschiebewegs des Hubkolbens entlang der Hubachse.

Erfindungsgemäß ist wenigstens eine Hubeinheit als Greifeinheit zum Greifen eines Gegenstands und wenigstens eine Hubeinheit als Drückeinheit (ohne Greifwirkung) zum Ausüben einer Druckkraft auf einen von dem Greifer gehaltenen Gegenstand, insbesondere in Ausfahrrichtung, ausgebildet. Jede Greifeinheit umfasst einen mit dem Hubkolben bewegungsgekoppelten, insbesondere an dem freien axialen Ende des Hubkolbens angeordneten, Greifer zum Greifen des Gegenstands. Jede Drückeinheit umfasst ein mit dem Hubkolben bewegungsgekoppeltes, insbesondere an dem freien axialen Ende des Hubkolbens angeordnetes, Drückelement, insbesondere zum Ausüben einer Druckkraft auf den von dem Greifer der wenigstens einen Greifeinheit gehaltenen Gegenstand, insbesondere in Ausfahrrichtung. Insbesondere ist das Drückelement zum Verformen eines von dem Greifer gehaltenen Gegenstands, insbesondere Flachmaterials, ausgebildet. Vorzugsweise sind Greifeinheit und Drückeinheit nebeneinander angeordnet.

Die vorgeschlagene Greifvorrichtung mit Drückeinheit ermöglicht es, einen von der Greifeinheit gehaltenes Flachmaterial, insbesondere Blech, zumindest lokal zu verformen und somit Adhäsionskräfte zwischen dem Gegenstand einem darunterliegenden Gegenstand zu lösen. Dadurch kann eine Mehrteilentnahme beim Abstapeln von Flachmaterialien auf konstruktiv einfache und kostengünstige Weise zuverlässig verhindert werden. Durch den Hub in den Hubkolben können zudem Unebenheiten und Umformungen an einem zu greifenden Gegenstand ausgeglichen werden, was ein zuverlässiges Greifen unterschiedlicher Flachmaterial-Typen ermöglicht.

Es ist denkbar, dass die Drückeinheit aktiv eine Druckkraft auf den Gegenstand ausgeübt, bspw. indem das Drückelement durch Ausfahren des Hubkolbens auf einen von dem Greifer gegriffenen Gegenstand gedrückt wird. Es ist auch denkbar, dass durch die Drückeinheit lediglich passiv eine Druckkraft auf den Gegenstand ausgeübt wird. Beispielsweise ist es denkbar, dass ein erster Abschnitt eines zu greifenden Gegenstands an dem Drückelement anliegt und ein zweiter, von dem ersten Abschnitt beabstandeter Abschnitt des Gegenstands relativ zu dem Drückelement, insbesondere in Einfahrrichtung, verlagert wird (bspw. im Zuge eines Greifvorgangs mittels des Greifers) und somit der Gegenstand lokal verformt wird. Insofern kann das Drückelement einen Anschlag für den Gegenstand bilden.

Das Drückelement kann grundsätzlich verschieden ausgebildet sein. Beispielsweise kann das Drückelement als Drückstift oder Drückknopf ausgebildet sein. Insbesondere weist das Drückelement an einer Stirnseite eine vorzugsweise ebene Anlagefläche zur Anlage an den Gegenstand auf.

Vorzugsweise ist der Hubkolben der wenigstens einen Greifeinheit und der Hubkolben der wenigstens einen Drückeinheit, insbesondere alle Hubkolben, voneinander unabhängig betätigbar, d.h. voneinander unabhängig wiederholbar aus- und wieder einfahrbar. Auf diese Weise ist eine flexible Ansteuerung der Greifvorrichtung begünstigt. Insbesondere ermöglicht es eine solche Ausgestaltung, die wenigstens eine Greifeinheit und die wenigstens eine Drückeinheit wahlweise gleichzeitig oder zeitlich versetzt auszufahren. Beispielsweise ist ein Handhabungsvorgang denkbar, bei dem zunächst die wenigstens eine Greifeinheit ausgefahren wird, ein zu greifender Gegenstand mit dem Greifer der ausgefahrenen Greifeinheit gegriffen wird, und sodann die wenigstens eine Drückeinheit ausgefahren wird, um den gegriffenen Gegenstand durch Ausüben einer Druckkraft zu verformen. Es sind auch Handhabungsvorgänge denkbar, bei denen Greifeinheit und Drückeinheit gleichzeitig aktiviert, also ausgefahren, werden und dann gemeinsam auf einen zu greifenden Gegenstand aufgesetzt werden.

Im Rahmen einer vorteilhaften Ausgestaltung können der Hubkolben der wenigstens einen Greifeinheit und der Hubkolben der wenigstens einen Drückeinheit, insbesondere alle Hubkolben, zueinander identisch aufgebaut sein. Auf diese Weise ist ein konstruktiv einfacher und kostengünstiger Aufbau ermöglicht. Zudem ist eine solche Greifvorrichtung flexibel nutzbar, da die Hubkolben nach Bedarf wahlweise als Greifeinheit oder als Drückeinheit verwendet werden können.

Insbesondere können die Hubkolben wahlweise zur Verbindung mit einem Greifer oder einem Drückelement ausgebildet sein. Dies kann beispielsweise dadurch realisiert sein, dass die Hubkolben an ihren freien Enden (d.h. an den vom Greifergrundkörper abgewandten Enden) jeweils eine Kupplungseinrichtung, insbesondere in Form einer Wechselbuchse, zur wahlweisen Ankupplung eines Greifers oder eines Drückelement aufweisen. Greifer und Drückelement können insofern flexibel angeordnet werden, sodass die Greifvorrichtung flexibel an unterschiedliche Anforderungen, bspw. in Abhängigkeit eines zu greifenden Gegenstands, angepasst werden kann.

Es kann vorteilhaft sein, wenn die wenigstens eine Greifeinheit und die wenigstens eine Drückeinheit derart ausgebildet sind, dass in der ausgefahrenen Konfiguration des jeweiligen Hubkolbens eine Anlagefläche des Drückelements zur Anlage an den Gegenstand und eine Anlagefläche (Greiffläche) des Greifers zur Anlage an den Gegenstand miteinander bündig angeordnet sind, also insbesondere auf einer gemeinsamen Ebene liegen.

Es kann auch vorteilhaft sein, wenn die wenigstens eine Greifeinheit und die wenigstens eine Drückeinheit derart ausgebildet sind, insbesondere das Drückelement derart ausgebildet und an dem Hubkolben angeordnet ist, dass in der ausgefahrenen Konfiguration der Hubkolben die Anlagefläche des Drückelements über die Anlagefläche des Greifers axial entlang der Hubachse in Ausfahrrichtung hervorsteht.

Besonders vorteilhaft ist es, wenn das Drückelement in seiner Position entlang der Hubachse verstellbar an dem Hubkolben gehaltert ist oder in verschiedenen Positionen entlang der Hubachse an dem Hubkolben montierbar ausgebildet ist. Auf diese Weise lässt sich eine Relativposition von Greifer und Drückelement auf besonders einfache Weise bedarfsgerecht anpassen. Insbesondere weist das Drückelement an seiner dem Hubkolben abgewandten Stirnseite eine Anlagefläche (Drückfläche) zur Anlage an den Gegenstand auf, wobei das Drückelement derart an dem Hubkolben gehaltert ist, dass eine Position der Anlagefläche entlang der Hubachse verstellbar ist.

Weiterhin kann es vorteilhaft sein, wenn das Drückelement zerstörungsfrei lösbar an dem Hubkolben gehaltert ist. Dies ermöglicht es das Drückelement, bspw. bei Verschleiß, auf einfache Weise zu ersetzen oder, bspw. in Abhängigkeit eines zu greifenden Gegenstands, durch ein anders geformtes Drückelement auszutauschen.

Es ist beispielsweise denkbar, dass das Drückelement in den Hubkolben einsteckbar oder einschraubbar ist. Es ist auch denkbar, dass das Drückelement auf den Hubkolben aufsteckbar oder aufschraubbar ist. Eine mögliche Realisierungsform kann darin bestehen, dass das Drückelement einen Gewindeabschnitt aufweist, welcher in ein Innengewinde des Hubkolbens einschraubbar ist oder auf ein Außengewinde des Hubkolbens aufschraubbar ist.

Der Greifer kann grundsätzlich verschieden ausgebildet sein. Im Rahmen einer vorteilhaften Ausgestaltung kann der Greifer eine Passivkonfiguration einnehmen, in welcher keine Greifkraft auf einen Gegenstand ausgeübt wird, und eine Aktivkonfiguration, in welcher eine Greifkraft auf den Gegenstand ausgeübt wird. Insofern kann der Greifer bedarfsweise aktivierbar und wieder deaktivierbar sein. Besonders vorteilhaft ist es, wenn die Greifeinheit derart ausgebildet ist, dass sich der Greifer in der eingefahrenen Konfiguration des Hubkolbens in der Passivkonfiguration befindet und durch Ausfahren des Hubkolbens aus der eingefahrenen Konfiguration in die ausgefahrene Konfiguration in die Aktivkonfiguration überführt wird. Insofern kann durch Ausfahren des Hubkolbens der Greifer aktiviert und somit eine Greifkraft bereitgestellt werden, was eine Steuerung und Aufbau der Greifvorrichtung vereinfacht.

Besonders bevorzugt ist es, wenn der Greifer wenigstens einer Greifeinheit als Sauggreifer zum Ansaugen eines zu greifenden Gegenstands ausgebildet ist. Insofern kann es sich bei wenigstens einer Greifeinheit um eine Sauggreifeinheit handeln. Vorzugsweise ist der Sauggreifer durch den Hubkolben hindurch mit Unterdruck beaufschlagbar. Insbesondere kann die Sauggreifeinheit derart ausgebildet sein, dass in der ausgefahrenen Konfiguration des Hubkolbens der Sauggreifer mit Unterdruck versorgt wird und insbesondere in der eingefahrenen Konfiguration eine Unterdruckversorgung unterbrochen ist.

Der Sauggreifer kann verschieden ausgebildet sein. Insbesondere kann der Sauggreifer eine oder mehrere Saugstellen zum Ansaugen des Gegenstands aufweisen. Beispielsweise ist es denkbar, dass der Sauggreifer als Elastomersauger umfassend wenigstens einen Saugkörper ausgebildet ist. Der Saugkörper kann auf den Hubkolben aufgesteckt oder aufgeschraubt sein. Bei Ausgestaltungen mit mehreren Greifeinheiten ist es denkbar, dass unterschiedliche Greifeinheiten unterschiedliche Sauggreifer, insbesondere unterschiedlich große Saugkörper, aufweisen oder eine unterschiedliche Anzahl an Saugkörpern aufweisen.

Im Rahmen einer vorteilhaften Realisierungsform der Greifvorrichtung kann die Greifvorrichtung, insbesondere an dem Greifergrundkörper, einen Unterdruckanschluss zum Anschluss an eine Unterdruckversorgung aufweisen. Der Greifergrundkörper kann ein, insbesondere integriertes, Unterdruckverteilersystem zum Verteilen von Unterdruck auf die Hubeinheiten aufweisen.

Bei Ausgestaltungen mit Sauggreifer ist die Greifeinheit vorzugsweise derart ausgebildet, dass in der ausgefahrenen Konfiguration des Hubkolbens eine Strömungsverbindung zwischen dem Unterdruckanschluss und dem Sauggreifer hergestellt ist und in der eingefahrenen Konfiguration des Hubkolbens diese Strömungsverbindung abgesperrt ist. Beispielsweise kann eine Absperreinrichtung zum Absperren und Freigeben des Strömungswegs zwischen Unterdruckanschluss und Sauggreifer vorgesehen sein, welche in der eingefahrenen Konfiguration des Hubkolbens eine Sperrstellung einnimmt und durch Ausfahren des Hubkolbens in die ausgefahrene Konfiguration in eine Freigabestellung überführt wird. Insofern kann durch Ausfahren des Hubkolbens die Saugstelle aktiviert werden. Vorzugsweise sind die Strömungsquerschnitte so ausgelegt, dass ein Systemvakuum nicht zusammenbricht wenn einzelne Saugstellen nicht belegt oder undicht sind.

Im Rahmen eines allgemeinen Aspekts können die Hubkolben der Hubeinheiten (unabhängig davon ob sie letztlich aus Greifeinheit oder Drückeinheit ausgebildet sind) jeweils einen innenliegenden Unterdruckkanal aufweisen, welcher in der ausgefahrenen Konfiguration mit dem Unterdruckanschluss strömungsverbunden ist. Insbesondere ist in der ausgefahrenen Konfiguration des Hubkolbens eine Strömungsverbindung zwischen dem Unterdruckanschluss und dem Sauggreifer hergestellt und in der eingefahrenen Konfiguration des Hubkolbens ist diese Strömungsverbindung abgesperrt. Der Unterdruckkanal kann insbesondere an der dem Greifergrundkörper abgewandten Stirnseite ausmünden.

Bei einer solchen Ausgestaltung der Greifvorrichtung kann dann der Sauggreifer einer optionalen Sauggreifeinheit über den Unterdruckkanal des mit ihm verbundenen Hubkolbens mit Unterdruck versorgbar sein. Das Drückelement der wenigstens einen Drückeinheit kann dann den Unterdruckkanal abdichtend an dem Hubkolben angeordnet sein.

Es kann auch vorteilhaft sein, wenn der Greifer wenigstens einer Greifeinheit als Magnetgreifer ausgebildet ist. Eine solche Ausgestaltung kann insbesondere beim Greifen von Metallblechen vorteilhaft sein, da Magnetgreifer bei vergleichsweise geringem Bauraum eine hohe Haltekraft bereitstellen können.

Das Aus- und Einfahren der Hubkolben kann grundsätzlich auf verschiedene Art und Weise erfolgen. Vorzugsweise sind die Hubkolben, insbesondere voneinander unabhängig, druckbetätigt, insbesondere druckluftbetätigt, aus der eingefahrenen Konfiguration in die ausgefahrene Konfiguration überführbar. Insofern können die Hubkolben durch Beaufschlagen eines entlang der Hubachse wirkenden Druckes (Unterdruck oder Überdruck) entlang der Hubachse verstellbar sein.

Besonders bevorzugt sind Ausgestaltungen, bei denen der Hubkolben durch Beaufschlagung mit Druckluft in Ausfahrrichtung verlagerbar ist, insbesondere ausgehend von der eingefahrenen Konfiguration in die ausgefahrene Konfiguration überführbar ist. Im Rahmen einer beispielhaften Realisierungsform kann der Greifergrundkörper einen Druckluftanschluss und ein Druckluftverteilersystem zum Verteilen der Druckluft auf die Hubeinheiten aufweisen.

Im Rahmen einer vorteilhaften Weiterbildung kann die Greifvorrichtung außerdem, insbesondere als Teil des Druckluftverteilersystems, eine Ventileinrichtung aufweisen, welche dazu ausgebildet ist, eine Druckluftversorgung der Hubkolben, insbesondere voneinander unabhängig, zu steuern, insbesondere eine jeweilige Strömungsverbindung zwischen den Hubkolben und dem Druckluftanschluss bedarfsweise abzusperren oder freizugeben. Die Ventileinrichtung kann insbesondere für jede Hubeinheit ein eigenes Druckluftventil aufweisen.

Weiterhin kann es vorteilhaft sein, wenn die Greifvorrichtung eine Steuereinrichtung, insbesondere Steuerplatine, aufweist, welche dazu ausgebildet ist, die Ventileinrichtung anzusteuern. Die Greifvorrichtung kann insofern eine eigene, insbesondere autarke, Steuerung aufweisen. Die Steuereinrichtung kann, bspw. über eine drahtlose Verbindung, mit einer übergeordneten Steuereinrichtung, bspw. einer Handhabungsanlage, in welche die Greifvorrichtung integriert ist, kommunizieren.

Die Ventileinrichtung und/oder die Steuereinrichtung können in oder an dem Greifergrundkörper angeordnet sein. Vorzugsweise sind die Ventileinrichtung und/oder die Steuereinrichtung in dem Greifergrundkörper vorgesehen. Auf diese Weise kann die Greifvorrichtung in eine Steuerbaugruppe (Ventileinrichtung + optionale Steuereinrichtung) und in eine Hubeinheitenbaugruppe (Hubeinheiten) unterteilt sein. Im Ersatzteilfall können dann beide Baugruppen getrennt voneinander getauscht werden.

Die Hubeinheiten können derart ausgebildet sein, dass die Hubkolben in die eingefahrene Konfiguration beaufschlagt, insbesondere federbeaufschlagt, sind. Insbesondere können die Hubeinheiten können derart ausgebildet sein, dass sie, bspw. durch die vorstehend beschriebene Federbeaufschlagung, bei Wegnahme der Druckbeaufschlagung automatisch in die eingefahrene Konfiguration überführt werden. Insofern können die Hubeinheiten in einer Ausgangskonfiguration sich in der eingefahrenen Konfiguration befinden.

Bei einer Ausgestaltung mit wenigstens einer Sauggreifeinheit ist es außerdem denkbar, dass die Hubkolben derart ausgebildet sind, dass die Hubkolben durch einen am Sauggreifer anliegenden Unterdruck in der ausgefahrenen Konfiguration gehalten sind.

Vorzugsweise sind die Hubeinheiten derart an dem Greifergrundkörper angeordnet, dass die Hubachsen der Hubeinheiten zueinander parallel verlaufen. Auf diese Weise ist eine besonders kompakte Anordnung geschaffen, welche sich besonders für das Greifen von flächenhaft erstreckten Bauteilen wie Blechen eignet.

Die Hubkolben können in einem jeweiligen Hubeinheitengehäuse gelagert sein. Das Hubeinheitengehäuse kann sich länglich entlang der Hubachse erstrecken, was eine kompakte Anordnung mehrerer Hubeinheiten nebeneinander begünstigt. Das Hubeinheitengehäuse kann zylindrisch ausgebildet sein. Das Hubeinheitengehäuse kann Teil des Greifergrundkörpers sein. Das Hubeinheitengehäuse kann von dem Greifergrundkörper separat bereitgestellt und an dem Greifergrundkörper befestigt sein.

Weiter kann es vorteilhaft sein, wenn zwischen einem dem Greifer oder dem Drückelement gegenüberliegenden Ende des Hubkolbens und einer Gehäuseinnenwandung des Hubeinheitengehäuses eine Druckkammer, insbesondere Unterdruckkammer, ausgebildet ist, sodass in der Aktivkonfiguration ein Luftpolster hinter dem Hubkolben bereitgestellt werden kann, welches einen Kollisionsschutz beim Aufsetzen des Sauggreifers auf einen Gegenstand bildet. Auf diese Weise können sowohl Gegenstand als auch Sauggreifer geschont werden.

Die Hubkolben können verdrehsicher um die Hubachse gehaltert sein. Beispielsweise ist es denkbar, dass eine Verdrehsicherung der Hubkolben über miteinander zusammenwirkende Kreissegmente realisiert ist. Eine solche Verdrehsicherung ist somit nicht klemmend.

Der Greifergrundkörper kann ein- oder mehrteilig ausgebildet sein. Der Greifergrundkörper kann einen Befestigungsabschnitt zur Befestigung an einem Träger, bspw. einer Flanschplatte eines Manipulators, aufweisen. Der Greifergrundkörper kann Steuer- und Ventileinheiten aufweisen (siehe unten).

Die Greifvorrichtung kann außerdem einen oder mehrere Sensoren umfassen. Beispielsweise können Sensoren zur Überwachung einer Verschiebestellung (eingefahrene Konfiguration / ausgefahrene Konfiguration) der Hubkolben vorgesehen sein. Bei Ausgestaltungen mit Sauggreifern kann zusätzlich oder alternativ jedem Sauggreifer, insbesondere jeder Saugstelle, ein Sensor zugeordnet sein, über welchen der Sauggreifer überwacht werden kann, bspw. hinsichtlich eines Funktionszustands (Passiv- / Aktivkonfiguration). Beispielsweise kann je Sauggreifer ein Drucksensor zur Überwachung eines Ansaugdruckes vorgesehen sein. Es ist auch denkbar, dass in Abhängigkeit eines im Sauggreifer vorherrschenden Unterdrucks eine Geschwindigkeit einer Handhabungsaufgabe selbstständig mittels Haltekraftermittlung angepasst wird. Alternativ oder zusätzlich kann auch wenigstens ein Sensor zur Abstandsüberwachung oder Kollisionswarnung vorgesehen sein. Die Sensoren können mit der optionalen Steuereinrichtung verbunden sein und von dieser ansteuerbar sein.

Im Rahmen einer vorteilhaften Weiterbildung können mehrere der vorstehend beschriebenen Greifvorrichtungen zu einem übergeordneten Greifmodul zusammengefasst sein. Die Greifvorrichtungen sind vorzugsweise nebeneinander angeordnet und miteinander verbunden. Beispielsweise ist es denkbar, dass die Greifergrundkörper der Greifvorrichtungen miteinander verblockt sind. Die Greifvorrichtungen können voneinander unabhängig ansteuerbar sein. Die Greifvorrichtungen des Greifmoduls können elektrisch miteinander verbunden sein.

Die vorstehend im Zusammenhang mit der Greifvorrichtung als solche beschriebenen Vorteile und optionalen Merkmale können auch zur Ausgestaltung des Greifmodul dienen.

Die Erfindung betrifft auch ein Verfahren zum Handhaben eines Gegenstands, insbesondere zum Vereinzeln von gestapelten Flachmaterialien, weiter insbesondere Blechen, mittels einer vorstehend beschriebenen Greifvorrichtung. Das Verfahren umfasst die folgenden Schritte:
- Ausfahren des Hubkolbens wenigstens einer Greifeinheit, insbesondere sodass der mit dem Hubkolben gekoppelte Greifer eine Aktivkonfiguration einnimmt;
- Aufsetzen des mit dem ausgefahrenen Hubkolben bewegungsgekoppelten Greifers auf den zu greifenden Gegenstand und Greifen des Gegenstands mittels des Greifers,
- Verformen des Gegenstands, umfassend das Ausüben einer Druckkraft auf den Gegenstand durch wenigstens eine Drückeinheit.

Das Verformen des Gegenstands kann auf unterschiedliche Weise realisiert sein. Es ist beispielsweise denkbar, dass nach dem Greifen des Gegenstands mittels der wenigstens einen Greifeinheit wenigstens eine Drückeinheit ausgefahren wird, um die Druckkraft auf den gegriffenen Gegenstand auszuüben. Insofern kann das Ausüben der Druckkraft das Ausfahren der wenigstens einen Drückeinheit, insbesondere nach dem Greifen durch die wenigstens eine Greifeinheit, umfassen.

Es ist auch denkbar, dass das Ausüben der Druckkraft das Anlegen des Drückelements der wenigstens einen Drückeinheit an einen ersten Abschnitt des Gegenstands und das anschließende Verlagern eines zweiten Abschnitts des Gegenstands relativ zu dem Drückelement, insbesondere in Einfahrrichtung, umfasst. Das Verlagern des zweiten Abschnitts weiter kann beispielsweise im Zuge des Greifens des Gegenstands mittels des Greifers erfolgen. Insofern kann das Verfahren das Ausfahren wenigstens einer Drückeinheit vor dem Greifen des Gegenstands umfassen. Bei einer Ausgestaltung der Greifvorrichtung mit Sauggreifer ist es beispielsweise denkbar, dass ein Ansaugprozess zum Greifen eines Gegenstands mit einer Verlagerung des von dem Sauggreifer angesaugten Abschnitts des Gegenstands in Einfahrrichtung einhergeht, sodass dieser Abschnitt des Gegenstands im Zuge des Ansaugens relativ zu einem an dem Drückelement anliegenden Abschnitt des Gegenstands verlagert und somit verformt wird.

Die Erfindung wird im Folgenden anhand der Figuren näher erläutert. Es zeigen:
Fig. 1 skizzierte Darstellung einer beispielhaften Ausgestaltung einer Greifvorrichtung in einer Seitenansicht;
Fig. 2 skizzierte Darstellung einer Hubeinheit in einer Schnittansicht;
Fig. 3 skizzierte Darstellung einer als Drückeinheit ausgebildeten Hubeinheit in einer Schnittansicht;
Fig. 4 skizzierte Darstellung einer weiteren beispielhaften Ausgestaltung einer Greifvorrichtung in einer Seitenansicht;
Fig. 5 skizzierte Darstellung einer weiteren beispielhaften Ausgestaltung einer Greifvorrichtung in einer Seitenansicht; und
Fig. 6 skizzierte Darstellung einer beispielhaften Anwendungssituation einer Greifvorrichtung.

In der nachfolgenden Beschreibung sowie in den Figuren sind für identische oder einander entsprechende Merkmale jeweils dieselben Bezugszeichen verwendet.

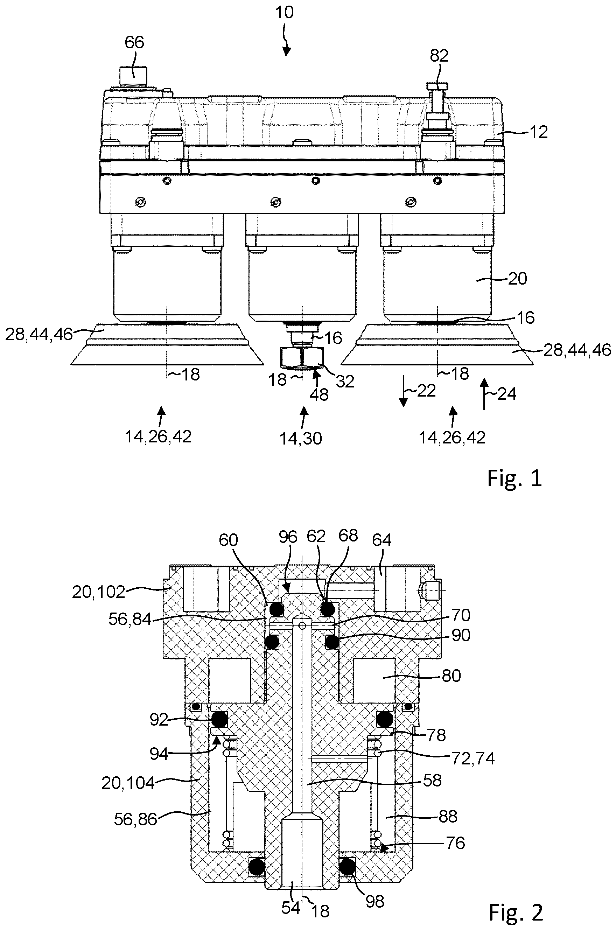

Die Figur 1 zeigt eine beispielhafte Ausgestaltung einer Greifvorrichtung, welche insgesamt mit dem Bezugszeichen 10 bezeichnet ist.

Die Greifvorrichtung 10 umfasst einen Greifergrundkörper 12 und drei an dem Greifergrundkörper 12 gehalterte Hubeinheiten 14. Bei nicht dargestellten Ausgestaltungen können auch mehr oder weniger Hubeinheiten 14 vorgesehen sein.

Jede Hubeinheit 14 umfasst einen Hubkolben 16, welcher entlang einer Hubachse 18 zwischen einer axial eingefahrenen Konfiguration und einer axial ausgefahrenen Konfiguration relativ zu dem Greifergrundkörper 12 verstellbar ist. Vorzugsweise ist der Hubkolben 16 druckluftbetätigt aus der eingefahrenen Konfiguration in die ausgefahrene Konfiguration überführbar (nachfolgend noch im Detail beschrieben).

Im Beispiel ist jeder Hubkolben 16 in einem jeweiligen Hubeinheitengehäuse 20 in einer Ausfahrrichtung 22 und in einer zu der Ausfahrrichtung 22 entgegengesetzten Einfahrrichtung 24 entlang der Hubachse 20 verschiebbar gelagert.

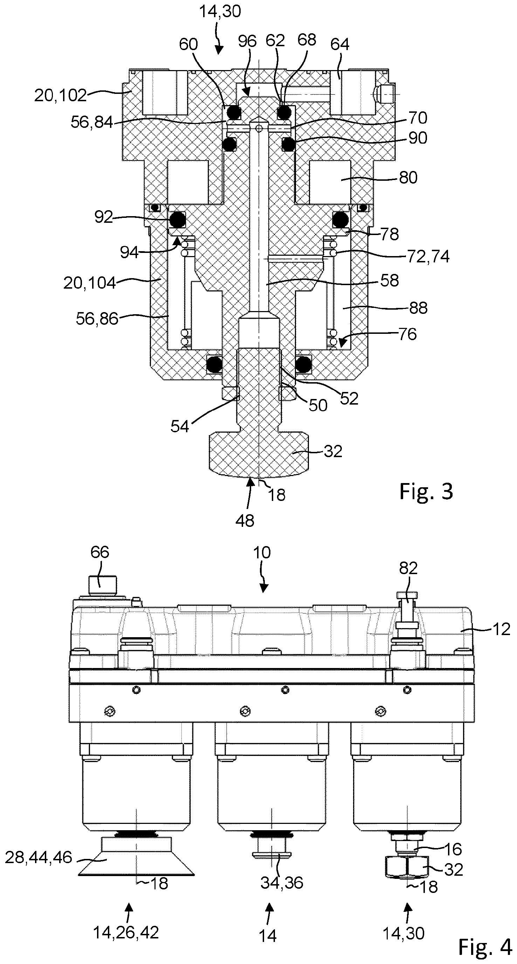

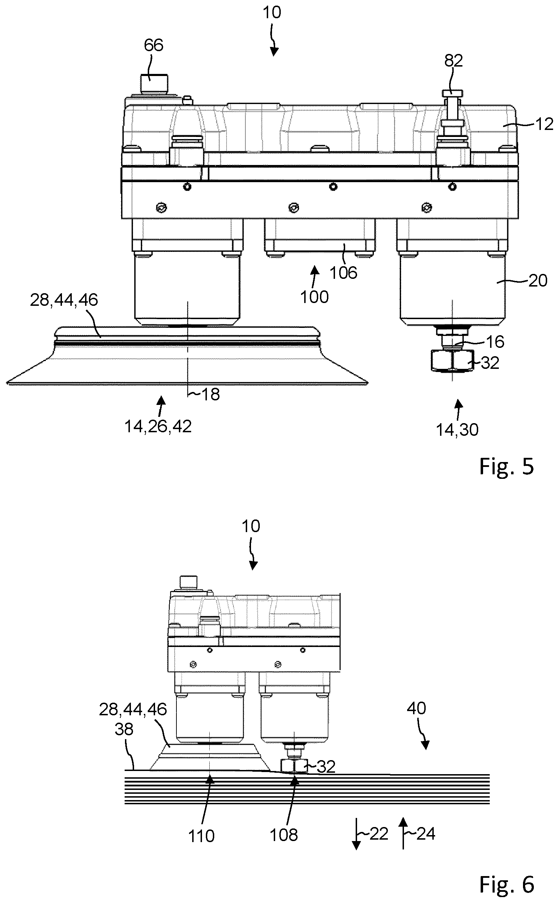

In der beispielhaften Konfiguration gemäß Figur 1 sind die beiden äußeren Hubeinheiten 14 als Greifeinheiten 26 mit je einem Greifer 28 zum Greifen eines Gegenstands ausgebildet sind und die mittlere Hubeinheit 14 ist als Drückeinheit 30 mit einem Drückelement 32 (ohne Greifwirkung) ausgebildet. Bei anderen Ausgestaltungen sind aber auch beliebige andere Konfigurationen denkbar (vgl. beispielsweise Figuren 4 und 5) .

Vorzugsweise unterscheiden sich Greifeinheit 26 und Drückeinheit 30 lediglich durch die Art des Aufsatzes (Greifer 28 oder Drückelement 32), sind aber im Übrigen zueinander identisch ausgebildet.

Beispielsweise können die Hubkolben 16 eine Kupplungseinrichtung 34, bspw. in Form einer Wechselkupplung 36, aufweisen, an welche wahlweise ein Greifer 38 oder ein Drückelement 32 ankoppelbar ist (vgl. Figur 4).

Bei nicht dargestellten Ausgestaltungen ist es aber auch denkbar, dass der Greifeinheit 26 und Drückeinheit 26 unterschiedlich im Aufbau sind.

Wie nachfolgend unter Bezugnahme auf die Figur 6 noch im Detail erläutert, ermöglicht eine solche Greifvorrichtung 10 mit Greifeinheit 26 und Drückeinheit 30 ein Flachmaterial 38 von einem Flachmaterialstapel 40 zu greifen und derart lokal zu verformen, dass ein Ankleben eines darunter liegenden Flachmaterials aufgrund von Adhäsionskräften verhindert wird. Die Greifvorrichtung 10 ist insofern insbesondere zum Vereinzeln von gestapelten Flachmaterialien 38, bspw. Blechen, geeignet.

In den dargestellten Beispielen sind die Greifeinheiten 26 als Sauggreifeinheiten 42 mit jeweils einem Sauggreifer 44 zum Ansaugen eines Gegenstands ausgebildet. Bei nicht dargestellten Ausgestaltungen ist es aber beispielswiese auch denkbar, dass eine Teilmenge der Greifeinheiten 26 oder alle Greifeinheiten 26 als Magnetgreifeinheiten mit einem Magnetgreifer als Greifer 28 ausgebildet sind.

Im Beispiel gemäß Figur 1 sind die Sauggreifer 44 als Elastomersaugkörper 46 ausgebildet, wobei die Saugkörper 46 der beiden Greifeinheiten 26 zueinander identisch ausgebildet sind. Bei anderen Ausgestaltungen (vgl. bspw. Figuren 4 und 5), ist es aber auch denkbar, dass verschieden große Saugkörper 46 vorgesehen sind. Es ist zudem denkbar, dass verschiedene Sauggreifer-Typen miteinander kombiniert werden.

Wie nachfolgend noch im Detail erläutert, ist der Sauggreifer 44 durch den Hubkolben 16 hindurch mit Unterdruck versorgbar.

In dem in Figur 1 gezeigten Beispiel ist das Drückelement 32 als Drückstift mit einer, insbesondere zu der Hubachse 18 orthogonalen, Anlagefläche 48 zur Anlage an den Gegenstand ausgebildet. Wie aus Figur 3 ersichtlich, kann die Anlagefläche 48 abgerundet sein, also eine Krümmung in Bezug auf die Hubachse 20 aufweisen.

Das Drückelement 32 ist vorzugsweise in den Hubkolben 16 einsteckbar oder einschraubbar ausgebildet, insbesondere derart, dass eine Position des Drückelements 32 entlang der Hubachse 18 veränderbar ist. Im Beispiel gemäß Figur 3 weist das Drückelement 32 einen Gewindeabschnitt 50 auf, welcher mit einem im Hubkolben 16 vorgesehenen Innengewinde 52 zusammenwirkt. Im Beispiel begrenzt das Innengewinde 52 eine Saugöffnung 54 des Hubkolbens 16, welche durch das Drückelement 32 abgedichtet ist (nachfolgend noch im Detail beschrieben).

Eine beispielhafte Konfiguration einer Hubeinheit 14 wird nachfolgend unter Bezugnahme auf die Figur 2 erläutert.

Wie vorstehend erwähnt, weist die Hubeinheit 14 ein Hubeinheitengehäuse 20 auf, welches sich länglich entlang der Hubachse 18 erstreckt. Das Hubeinheitengehäuse 20 begrenzt einen Gehäuseinnenraum 56, in welchem der Hubkolben 16 entlang der Hubachse 18 verlagerbar geführt ist.

Wie aus Figur 1 ersichtlich, sind die Hubeinheitengehäuse 20 vorzugsweise derart nebeneinander an dem Greifergrundkörper 12 gehaltert, dass die Hubachsen 18 der einzelnen Hubeinheiten 14 zueinander parallel verlaufen.

Wie vorstehend erwähnt, weist der Hubkolben 16 einen innenliegenden Unterdruckkanal 58 auf, welcher mit einer Saugöffnung 54 an dem freien axialen Ende des Hubkolbens 16 ausmündet.

Bei Ausbildung der Hubeinheit 14 als Sauggreifeinheit 42 mit Sauggreifer 44 ist die Saugöffnung 54 des Unterdruckkanals 58 mit dem Sauggreifer 44 strömungsverbunden, sodass der Sauggreifer 44 über den Unterdruckkanal 58 mit Unterdruck versorgbar ist.

Bei Ausbildung der Hubeinheit 14 als Drückeinheit 32, ist die Saugöffnung 54 insbesondere durch das Drückelement 32 verschlossen und somit abgedichtet (vgl. Figur 3 und Ausführungen oben hierzu).

Die Versorgung des Unterdruckkanals 58 mit Unterdruck erfolgt im Beispiel über eine im Gehäuseinnenraum 56 ausgebildete erste Unterdruckkammer 60, welche über eine Kammeröffnung 62 mit einem nicht näher gezeigten Unterdruckverteilersystem 64 mit Unterdruck versorgbar ist. Das Unterdruckverteilersystem 64 ist insbesondere über einen am Greifergrundkörper 12 vorgesehenen Unterdruckanschluss 66 mit einer externen Unterdruckversorgung verbunden.

Wie aus Figur 2 ersichtlich, ist die Kammeröffnung 62 in der axial eingefahrenen Konfiguration (Passivkonfiguration) durch eine am Hubkolben 16 angeordnete erste Dichteinrichtung 68 abgedichtet, sodass eine Unterdruckversorgung der ersten Unterdruckkammer 60 und somit des Unterdruckkanals 58 und somit des Sauggreifers 44 abgesperrt ist. Durch Verlagern des Hubkolbens 16 in Ausfahrrichtung 22 wird die erste Dichteinrichtung 68 von der Kammeröffnung 62 abgehoben, sodass Unterdruck über das Unterdruckverteilersystem 64 in die erste Unterdruckkammer 60 und von dort über einen radialen Zufuhrkanal 70 in den Unterdruckkanal 58 einströmen kann. In der ausgefahrenen Konfiguration nimmt der Sauggreifer 44 dann eine Aktivkonfiguration ein, in welcher der Sauggreifer 44 mit Unterdruck versorgt ist und somit einen Gegenstand ansaugen kann.

Im Beispiel ist der Hubkolben 16 mittels einer Federeinrichtung 72 in die eingefahrene Konfiguration beaufschlagt. Die Federeinrichtung 72 umfasst eine Druckfeder 74. Die Druckfeder 74 stützt sich mit einem ersten Ende an einer Gehäuseinnenwandung 76 des Hubeinheitengehäuses 20 und mit dem zweiten Ende an einer radialen Auskragung 78 des Hubkolbens 16 ab (in den Figuren ist der Übersichtlichkeit halber lediglich ein Teilabschnitt der Feder 74 gezeigt).

Um den Hubkolben 16 aus der eingefahrenen Konfiguration - entgegen der Federbeaufschlagung - in die ausgefahrene Konfiguration zu überführen - und somit die erste Dichteinrichtung 68 von der Kammeröffnung 62 abzuheben, ist in dem Gehäuseinnenraum 56 außerdem eine Überdruckkammer 80 vorgesehen, durch Beaufschlagen derer mit Druckluft der Hubkolben 16 in Ausfahrrichtung 22 beaufschlagt wird.

Zu diesem Zweck weist die Greifvorrichtung 10, vorzugsweise am Greifergrundkörper 12, außerdem einen Druckluftanschluss 82 und ein nicht näher gezeigtes Druckluftverteilersystem zum Verteilen von Druckluft auf die einzelnen Hubeinheiten 14 auf.

Wie vorstehend erwähnt, kann die Greifvorrichtung 10, insbesondere im Greifergrundkörper 12, außerdem eine oder mehrere Ventileinrichtungen (nicht dargestellt) zur Steuerung einer Druckluftversorgung und/oder eine oder mehrere Ventileinrichtungen zur Steuerung einer Unterdruckversorgung der Hubeinheiten 14 umfassen. Die Greifvorrichtung 10 kann außerdem eine integrierte Steuereinrichtung (nicht dargestellt) zum Ansteuern der Ventileinrichtung(en) aufweisen.

Die in Figur 2 gezeigte Hubeinheit 14 ist derart ausgebildet, dass der Hubkolben 16 - bei Öffnen der Kammeröffnung 62 der ersten Unterdruckkammer 60 - durch die Wirkung des Unterdrucks in Ausfahrrichtung 22 gezogen bzw. in der ausgefahrenen Konfiguration gehalten wird. Diese nachfolgend noch näher beschriebene Selbsthaltungsfunktion ist vorteilhaft, aber für die erfindungsgemäße Ausgestaltung nicht zwingend.

Im konkreten weist der Gehäuseinnenraum 56 einen ersten Gehäuseinnenraumabschnitt 84 und einen in Ausfahrrichtung 22 dahinter angeordneten zweiten Gehäuseinnenraumabschnitt 86 auf, wobei entlang der Hubachse 18 betrachtet eine Querschnittsfläche des ersten Gehäuseinnenraumabschnitts 84 kleiner als eine Querschnittsfläche des zweiten Gehäuseinnenraumabschnitts 86 (vgl. Fig. 2).

Wie in Figur 2 gezeigt, ist der Hubkolben 16 derart ausgebildet, dass der Gehäuseinnenraum 56 in die erste Unterdruckkammer 60, eine zweite Unterdruckkammer 88 und die vorstehend erwähnte Überdruckkammer 80 unterteilt ist, wobei die Überdruckkammer 80 im Beispiel zwischen erster Unterdruckkammer 60 und zweiter Unterdruckkammer 88 angeordnet ist. Die Kammern 60, 80, 88 sind dabei durch Veränderung einer Verschiebestellung des Hubkolbens 16 entlang der Hubachse 18 in ihrer Größe veränderbar.

Im konkreten Beispiel trennt der Hubkolben 16 mittels einer zweiten Dichteinrichtung 90 einen Bereich des ersten Gehäuseinnenraumabschnitts 84 ab, welcher die erste Unterdruckkammer 60 bildet. In dem zweiten Gehäuseinnenraumabschnitt 86 unterteilt die vorstehend erwähnte radiale Auskragung 78 den zweiten Gehäuseinnenraumabschnitt 86 in die Überdruckkammer 80 und die zweite Unterdruckkammer 88. Zur Abdichtung der Überdruckkammer 80 gegenüber der zweiten Unterdruckkammer 88 ist eine dritte Dichteinrichtung 92, bspw. in Form eines O-Rings, vorgesehen.

Die erste Unterdruckkammer 60 und die zweite Unterdruckkammer 88 sind über den Unterdruckkanal 58 miteinander strömungsverbunden, sodass die zweite Unterdruckkammer 88 über die erste Unterdruckkammer 60 und den Unterdruckkanal 58 mit Unterdruck versorgbar ist. In der ersten Unterdruckkammer 60 und in der zweiten Unterdruckkammer 88 herrscht insofern insbesondere stets der gleiche Druck. Durch den Unterdruckkanal 58 kann insofern die Überdruckkammer 80 überbrückt werden.

Wird die Überdruckkammer 80 zumindest kurzzeitig mit Druckluft beaufschlagt, wirkt die Druckluft auf den Hubkolben 16, insbesondere die radiale Auskragung 78, sodass der Hubkolben 16 entgegen der Federbeaufschlagung durch die Druckfeder 74 in Ausfahrrichtung 22 bewegt wird. und somit wie vorstehend beschrieben die Kammeröffnung 62 geöffnet wird. In Folge dessen wird Unterdruck in die erste Unterdruckkammer 60 und schließlich über den Unterdruckkanal 58 in die zweite Unterdruckkammer 88 (und optional in den Sauggreifer 44) geleitet.

Die Unterdruckkammern 60, 88 und der Hubkolben 16 sind dabei derart bemessen, dass durch den in den Unterdruckkammern 60, 88 dann vorliegenden Unterdruck eine Kraftwirkung in Ausfahrrichtung 22 auf den Hubkolben 16 ausgeübt wird. Im Beispiel ist dies dadurch realisiert, dass der Hubkolben 16 erste Flächenabschnitte 94 aufweist, welche derart orientiert sind, dass durch Einwirken des in den Unterdruckkammern 60, 88 vorherrschenden Unterdrucks auf die ersten Flächenabschnitte 94 eine Kraftwirkung auf den Hubkolben 16 in Ausfahrrichtung 22 ausgeübt wird. Im Beispiel sind solche erste Flächenabschnitte 94 beispielsweise durch die axialen Stirnflächen der radialen Auskragung 78 gebildet, welche die zweite Unterdruckkammer 88 begrenzen.

Außerdem sind zweite Flächenabschnitte 96 vorgesehen, welche derart orientiert sind, dass durch Einwirken des in den Unterdruckkammern 60, 88 vorherrschenden Unterdrucks auf die zweiten Flächenabschnitte 96 eine Kraftwirkung auf den Hubkolben 16 in Einfahrrichtung 24 ausgeübt wird. Im Beispiel sind solche zweite Flächenabschnitte 96 beispielsweise durch die axiale Stirnfläche des Hubkolbens 16 gebildet, welche die erste Unterdruckkammer 60 begrenzen.

Eine Summe aller ersten Flächenabschnitte 94 ist dabei größer als eine Summe aller zweiten Flächenabschnitte 96, sodass netto eine Kraft in Ausfahrrichtung 22 auf den Hubkolben 16 wirkt. Diese Kraft ist insofern einer Kraft infolge der Beaufschlagung mittels Druckluft überlagert.

Um eine Leckage von Unterdruck zu verhindern, sind im Beispiel optionale weitere Dichteinrichtungen 98 vorgesehen, welche den Hubkolben 16 gegenüber dem Gehäuse 20 abdichten.

Die Figuren 4 und 5 zeigen weitere beispielhafte Ausgestaltungen einer Greifvorrichtung 10 mit unterschiedlicher Anordnung und Ausgestaltung von Greifeinheiten 26 und Drückeinheiten 30.

Die Figur 4 zeigt dabei eine Ausgestaltung, bei der an der mittleren Hubeinheit 14 noch kein Greifer 28 oder Drückelement 32 angeordnet ist, sodass die vorstehend erwähnte Kupplungseinrichtung 34 sichtbar ist.

Die Figur 5 zeigt dabei eine Ausgestaltung, bei der die linke Hubeinheit 14 als Greifeinheit 26 mit einem vergleichsweise großen, tellerförmigen Saugkörper 46 ausgebildet ist und die rechte Hubeinheit als Drückeinheit 30 mit einem Drückelement 32 ausgebildet ist.

Die mittlere Hubeinheit 14 ist hingegen als Blindeinheit 100 ohne Hubkolben 16 ausgebildet.

Wie aus Figur 2 ersichtlich, ist das Hubeinheitengehäuse 20 vorzugsweise zweiteilig ausgebildet mit einem am Greifergrundkörper 12 befestigten oder mit dem Greifergrundkörper 12 integral ausgebildeten Basisabschnitt 102 und einem an dem Basisabschnitt 102 befestigten, im Beispiel topfförmigen, Aufsatz 104.

Bei der in Figur 5 mittleren Hubeinheit 14 (Blindeinheit 100) sind der Aufsatz 104 und der Hubkolben 16 entfernt und stattdessen der Basisabschnitt 102 mit einer Deckelplatte 106 verschlossen. Die Deckelplatte 106 ist dabei vorzugsweise fluiddicht an dem Basisabschnitt 102 befestigt, sodass der erste Gehäuseinnenraumabschnitt 84 mit der ersten Unterdruckkammer 60 und die Überdruckkammer 80 voneinander fluidisch getrennt sind. Auf diese Weise kann auch ohne Hubkolben 16 ein Unterdruck im Unterdruckverteilersystem 64 bzw. Druckluft im Druckluftverteilersystem aufrechterhalten werden.

Nachfolgend wird unter Bezugnahme auf die Figur 6 eine beispielhafte Anwendungssituation einer vorstehend beschriebenen Greifvorrichtung 10 erläutert, wobei vereinfacht nur eine Greifeinheit 26 und eine Drückeinheit 30 betrachtet werden.

Die Figur 6 zeigt dabei einen Flachmaterialstapel 40 mit einer Vielzahl von aufeinander gestapelten Flachmaterialien 38, bspw. in Form von Blechen. Wie in Figur 6 dargestellt, wird beim Anheben des obersten Flachmaterials 38 dieses lokal zwischen Sauggreifer 44 und Drückeinheit 30 verformt und somit ein Ankleben des darunterliegenden Flachmaterials 38 durch Adhäsionskräfte verhindert.

Die Figur 6 zeigt dabei eine Konfiguration, in welcher eine Verformung durch eine Relativbewegung von Gegenstand (Flachmaterial 38) und Drückelement 32 im Zuge eines Ansaugvorgang des Gegenstands mit dem Sauggreifer 44 erfolgt. Im Konkreten liegt das Drückelement 32 an einem ersten Abschnitt 108 des Flachmaterials 38 an und der Sauggreifer 44 liegt an einem davon beabstandeten zweiten Abschnitt 110 des Flachmaterials 38 an. Beim Ansaugen des Flachmaterials 38 durch den Sauggreifer 44 wird sodann der zweite Abschnitt 110 in Einfahrrichtung 24 bewegt und somit relativ zu dem ersten Abschnitt 108 verlagert, sodass das Flachmaterial 38 lokal verformt wird (Die in Figur 6 dargestellte Verformung ist dabei nicht maßstabsgetreu dargestellt).

Wie vorstehend erwähnt, ist es aber auch denkbar, dass zunächst der Sauggreifer 44 ausgefahren wird, dieser das Blech 38 ansaugt, und erst danach die Drückeinheit 30 ausgefahren wird, um eine Druckkraft auf das Flachmaterial 38 in Ausfahrrichtung auszuüben.

## Patentansprüche

1. Greifvorrichtung (10) zum Greifen und Handhaben eines Gegenstands, insbesondere Flachmaterials (38), umfassend:
- einen Greifergrundkörper (12), und
- wenigstens zwei an dem Greifergrundkörper (12) angeordnete Hubeinheiten (14), jeweils umfassend einen Hubkolben (16), welcher entlang einer Hubachse (18) zwischen einer axial eingefahrenen Konfiguration und einer axial ausgefahrenen Konfiguration, insbesondere druckluftbetätigt, verstellbar ist,
wobei wenigstens eine Hubeinheit (14) als Greifeinheit (26) ausgebildet ist, umfassend einen mit dem Hubkolben (16) bewegungsgekoppelten Greifer (28) zum Greifen des Gegenstands, und
wobei wenigstens eine Hubeinheit (14) als Drückeinheit (30) ausgebildet ist, umfassend ein mit dem Hubkolben (16) bewegungsgekoppeltes Drückelement (32) zum Ausüben einer Druckkraft auf einen von dem Greifer (28) gehaltenen Gegenstand.

2. Greifvorrichtung (10) nach Anspruch 1, wobei der Hubkolben (16) der wenigstens einen Greifeinheit (26) und der Hubkolben (16) der wenigstens einen Drückeinheit (30), insbesondere alle Hubkolben (16), voneinander unabhängig, betätigbar sind.

3. Greifvorrichtung (10) nach Anspruch 1 oder 2, wobei der Hubkolben (16) der wenigstens einen Greifeinheit (26) und der Hubkolben (16) der wenigstens einen Drückeinheit (30), insbesondere alle Hubkolben (16), zueinander identisch ausgebildet sind.

4. Greifvorrichtung (10) nach einem der vorherigen Ansprüche, wobei die Hubkolben (16) an ihren freien Enden jeweils eine Kupplungseinrichtung (34), insbesondere Wechselbuchse (36), zum wahlweisen Ankuppeln eines Greifers (28) oder eines Drückelements (32) aufweisen.

5. Greifvorrichtung (10) nach einem der vorherigen Ansprüche, wobei wenigstens eine Greifeinheit (26) und wenigstens eine Drückeinheit (30) derart ausgebildet sind, insbesondere das Drückelement (32) derart an dem Hubkolben (16) angeordnet ist, dass in der ausgefahrenen Konfiguration eine Anlagefläche (48) des Drückelements (32) zur Anlage an den Gegenstand axial über eine Anlagefläche des Greifers (26) zur Anlage an den Gegenstand hervorsteht.

6. Greifvorrichtung (10) nach einem der vorherigen Ansprüche, wobei das Drückelement (32) in seiner Position entlang der Hubachse (18) verstellbar an dem Hubkolben (16) gehaltert ist oder in verschiedenen Positionen entlang der Hubachse (18) an dem Hubkolben (16) montierbar ausgebildet ist, insbesondere wobei das Drückelement (32) in den Hubkolben (16) einsteckbar oder einschraubbar ist oder auf den Hubkolben (16) aufsteckbar oder aufschraubbar ist.

7. Greifvorrichtung (10) nach einem der vorherigen Ansprüche, wobei der Greifer (28) eine Passivkonfiguration einnehmen kann, in welcher keine Greifkraft auf einen Gegenstand ausgeübt wird, und eine Aktivkonfiguration, in welcher eine Greifkraft auf den Gegenstand ausgeübt wird, wobei die Greifeinheit (26) derart ausgebildet ist, dass sich der Greifer (28) in der eingefahrenen Konfiguration des Hubkolbens (16) in der Passivkonfiguration befindet und durch Ausfahren des Hubkolbens (16) aus der eingefahrenen Konfiguration in die ausgefahrene Konfiguration in die Aktivkonfiguration überführt wird.

8. Greifvorrichtung (10) nach einem der vorherigen Ansprüche, wobei wenigstens eine Greifeinheit (26) als Sauggreifeinheit (42) mit einem Sauggreifer (44) zum Ansaugen eines Gegenstands ausgebildet ist.

9. Greifvorrichtung (10) nach dem vorherigen Anspruch, wobei die Greifvorrichtung (10), insbesondere der Greifergrundkörper (12), einen Unterdruckanschluss (66) zum Anschluss an eine Unterdruckversorgung aufweist, wobei der Hubkolben (16) der wenigstens einen Sauggreifeinheit (42), insbesondere alle Hubkolben (16), jeweils einen Unterdruckkanal (58) aufweisen, insbesondere wobei die wenigstens eine Sauggreifeinheit (42), insbesondere alle Hubeinheiten (16), derart ausgebildet ist, dass in der ausgefahrenen Konfiguration des Hubkolbens (16) eine Strömungsverbindung zwischen dem Unterdruckanschluss (66) und dem Unterdruckkanal (58) hergestellt ist und in der eingefahrenen Konfiguration des Hubkolbens (16) diese Strömungsverbindung abgesperrt ist.

10. Greifvorrichtung (10) nach dem vorherigen Anspruch, wobei der Sauggreifer (44) über den Unterdruckkanal (58) des mit ihm verbundenen Hubkolbens (16) mit Unterdruck versorgbar ist.

11. Greifvorrichtung (10) nach einem der Ansprüche 9 oder 10, wobei das Drückelement (32) den Unterdruckkanal (58) des mit ihm verbundenen Hubkolbens (16) abdichtet.

12. Greifvorrichtung (10) nach einem der vorherigen Ansprüche, wobei der Greifer (28) wenigstens einer Greifeinheit (26) als Magnetgreifer ausgebildet ist.

13. Greifmodul, umfassend eine Mehrzahl von Greifvorrichtungen (10) nach einem der vorherigen Ansprüche, wobei die Greifvorrichtungen miteinander verbunden sind.

14. Verfahren zum Handhaben eines Gegenstands, insbesondere zum Vereinzeln von gestapelten Flachmaterialien (38), mittels einer Greifvorrichtung (10) nach einem der vorherigen Ansprüche, umfassend:
- Ausfahren des Hubkolbens (16) wenigstens einer Greifeinheit (26),
- Aufsetzen des mit dem ausgefahrenen Hubkolben (16) gekoppelten Greifers (28) auf den zu greifenden Gegenstand und Greifen des Gegenstands mittels des Greifers (28),
- Verformen des Gegenstands, umfassend das Ausüben einer Druckkraft auf den Gegenstand durch wenigstens eine Drückeinheit (30).

15. Verfahren nach dem vorherigen Anspruch, wobei nach dem Greifen des Gegenstands mittels des Greifers (28) wenigstens eine Drückeinheit (30) ausgefahren wird, um die Druckkraft auf den gegriffenen Gegenstand auszuüben oder wobei vor dem Aufsetzen des Greifers (28) wenigstens eine Drückeinheit (30) ausgefahren wird.

## Geänderte Patentansprüche

### Geänderte Patentansprüche gemäss Regel 137(2) EPÜ.

1. Greifvorrichtung (10) zum Greifen und Handhaben eines Gegenstands, insbesondere Flachmaterials (38), umfassend:
- einen Greifergrundkörper (12), und
- wenigstens zwei an dem Greifergrundkörper (12) angeordnete Hubeinheiten (14), jeweils umfassend einen Hubkolben (16), welcher entlang einer Hubachse (18) zwischen einer axial eingefahrenen Konfiguration und einer axial ausgefahrenen Konfiguration, insbesondere druckluftbetätigt, verstellbar ist,
wobei wenigstens eine Hubeinheit (14) als Greifeinheit (26) ausgebildet ist, umfassend einen mit dem Hubkolben (16) bewegungsgekoppelten Greifer (28) zum Greifen des Gegenstands,
**dadurch gekennzeichnet, dass** wenigstens eine Hubeinheit (14) als Drückeinheit (30) ohne Greifwirkung ausgebildet ist, umfassend ein mit dem Hubkolben (16) bewegungsgekoppeltes Drückelement (32) zum Ausüben einer Druckkraft auf einen von dem Greifer (28) gehaltenen Gegenstand.

2. Greifvorrichtung (10) nach Anspruch 1, wobei der Hubkolben (16) der wenigstens einen Greifeinheit (26) und der Hubkolben (16) der wenigstens einen Drückeinheit (30), insbesondere alle Hubkolben (16), voneinander unabhängig, betätigbar sind.

3. Greifvorrichtung (10) nach Anspruch 1 oder 2, wobei der Hubkolben (16) der wenigstens einen Greifeinheit (26) und der Hubkolben (16) der wenigstens einen Drückeinheit (30), insbesondere alle Hubkolben (16), zueinander identisch ausgebildet sind.

4. Greifvorrichtung (10) nach einem der vorherigen Ansprüche, wobei die Hubkolben (16) an ihren freien Enden jeweils eine Kupplungseinrichtung (34), insbesondere Wechselbuchse (36), zum wahlweisen Ankuppeln eines Greifers (28) oder eines Drückelements (32) aufweisen.

5. Greifvorrichtung (10) nach einem der vorherigen Ansprüche, wobei wenigstens eine Greifeinheit (26) und wenigstens eine Drückeinheit (30) derart ausgebildet sind, insbesondere das Drückelement (32) derart an dem Hubkolben (16) angeordnet ist, dass in der ausgefahrenen Konfiguration eine Anlagefläche (48) des Drückelements (32) zur Anlage an den Gegenstand axial über eine Anlagefläche des Greifers (26) zur Anlage an den Gegenstand hervorsteht.

6. Greifvorrichtung (10) nach einem der vorherigen Ansprüche, wobei das Drückelement (32) in seiner Position entlang der Hubachse (18) verstellbar an dem Hubkolben (16) gehaltert ist oder in verschiedenen Positionen entlang der Hubachse (18) an dem Hubkolben (16) montierbar ausgebildet ist, insbesondere wobei das Drückelement (32) in den Hubkolben (16) einsteckbar oder einschraubbar ist oder auf den Hubkolben (16) aufsteckbar oder aufschraubbar ist.

7. Greifvorrichtung (10) nach einem der vorherigen Ansprüche, wobei der Greifer (28) eine Passivkonfiguration einnehmen kann, in welcher keine Greifkraft auf einen Gegenstand ausgeübt wird, und eine Aktivkonfiguration, in welcher eine Greifkraft auf den Gegenstand ausgeübt wird, wobei die Greifeinheit (26) derart ausgebildet ist, dass sich der Greifer (28) in der eingefahrenen Konfiguration des Hubkolbens (16) in der Passivkonfiguration befindet und durch Ausfahren des Hubkolbens (16) aus der eingefahrenen Konfiguration in die ausgefahrene Konfiguration in die Aktivkonfiguration überführt wird.

8. Greifvorrichtung (10) nach einem der vorherigen Ansprüche, wobei wenigstens eine Greifeinheit (26) als Sauggreifeinheit (42) mit einem Sauggreifer (44) zum Ansaugen eines Gegenstands ausgebildet ist.

9. Greifvorrichtung (10) nach dem vorherigen Anspruch, wobei die Greifvorrichtung (10), insbesondere der Greifergrundkörper (12), einen Unterdruckanschluss (66) zum Anschluss an eine Unterdruckversorgung aufweist, wobei der Hubkolben (16) der wenigstens einen Sauggreifeinheit (42), insbesondere alle Hubkolben (16), jeweils einen Unterdruckkanal (58) aufweisen, insbesondere wobei die wenigstens eine Sauggreifeinheit (42), insbesondere alle Hubeinheiten (16), derart ausgebildet ist, dass in der ausgefahrenen Konfiguration des Hubkolbens (16) eine Strömungsverbindung zwischen dem Unterdruckanschluss (66) und dem Unterdruckkanal (58) hergestellt ist und in der eingefahrenen Konfiguration des Hubkolbens (16) diese Strömungsverbindung abgesperrt ist.

10. Greifvorrichtung (10) nach dem vorherigen Anspruch, wobei der Sauggreifer (44) über den Unterdruckkanal (58) des mit ihm verbundenen Hubkolbens (16) mit Unterdruck versorgbar ist.

11. Greifvorrichtung (10) nach einem der Ansprüche 9 oder 10, wobei das Drückelement (32) den Unterdruckkanal (58) des mit ihm verbundenen Hubkolbens (16) abdichtet.

12. Greifvorrichtung (10) nach einem der vorherigen Ansprüche, wobei der Greifer (28) wenigstens einer Greifeinheit (26) als Magnetgreifer ausgebildet ist.

13. Greifmodul, umfassend eine Mehrzahl von Greifvorrichtungen (10) nach einem der vorherigen Ansprüche, wobei die Greifvorrichtungen miteinander verbunden sind.

14. Verfahren zum Handhaben eines Gegenstands, insbesondere zum Vereinzeln von gestapelten Flachmaterialien (38), mittels einer Greifvorrichtung (10) nach einem der vorherigen Ansprüche, umfassend:
- Ausfahren des Hubkolbens (16) wenigstens einer Greifeinheit (26),
- Aufsetzen des mit dem ausgefahrenen Hubkolben (16) gekoppelten Greifers (28) auf den zu greifenden Gegenstand und Greifen des Gegenstands mittels des Greifers (28),
- Verformen des Gegenstands, umfassend das Ausüben einer Druckkraft auf den Gegenstand durch wenigstens eine Drückeinheit (30).

15. Verfahren nach dem vorherigen Anspruch, wobei nach dem Greifen des Gegenstands mittels des Greifers (28) wenigstens eine Drückeinheit (30) ausgefahren wird, um die Druckkraft auf den gegriffenen Gegenstand auszuüben oder wobei vor dem Aufsetzen des Greifers (28) wenigstens eine Drückeinheit (30) ausgefahren wird.
